# EUROPEAN PATENT SPECIFICATION

(11) **EP 1 975 580 B1**
(45) Date of publication and mention of the grant of the patent: **16.05.2012**
(21) Application number: 08153438.0
(22) Date of filing: 27.03.2008
(51) Int. Cl.: G01K 13/02

(54) **Temperature sensor with improved resistance against vibration**
Temperatursensor mit verbesserter Stoßfestigkeit
Capteur de température avec résistance améliorée anti-vibration

(30) Priority: 28.03.2007 JP 2007084787
(43) Date of publication of application: 01.10.2008
(73) Proprietor: DENSO CORPORATION, Kariya-city, Aichi 448-8661 (JP)
(72) Inventor: Yoshida, Kouichi, Kariya-city, Aichi 448-8661 (JP)
(74) Representative: TBK

(56) References cited:
- JP-A- 6 229 840
- JP-A- 2005 055 254
- US-A- 6 130 598

## Description

### FIELD OF THE INVENTION

The present invention relates to methods of manufacturing temperature sensors with improved resistance against vibration.

### BACKGROUND OF THE INVENTION

Temperature sensors with a thermistor as a thermo-sensitive element are preferably installed in a passage through which exhaust gas flows; this passage is formed inside of, for instance, a catalytic converter for exhaust emission control systems, or an exhaust pipe. Such a temperature sensor is operative to measure, with the thermistor, the temperature of exhaust gas flowing through such a passage.

Thermistors are sensitive to temperature, an electrical characteristic changing as the temperature changes.

A common temperature sensor is for example disclosed in Japanese Patent Application Publication No. 2004-317499. The temperature sensor disclosed in the Patent Application Publication consists of a cylindrical housing and a sensing element. The sensing element is installed in the cylindrical housing such that one end portion of the sensing element projects therefrom. The sensing element is provided at the head of its overhanging portion with a thermistor. The sensing element is provided with a pair of core wires covered with a sheath by which the core wires are electrically insulated. One end of each of the core wires projects from one end of the sheath.

The one ends of the pair of core wires are connected with a pair of electrode wires mounted in the thermistor, and the other ends thereof are connected with a control circuit.

The thermistor with the paired electrode wires and the paired core wires are installed within a substantially cylindrical metallic cover with one closed end. In order to improve the sensitivity of the covered thermistor to temperature, an electric insulator with high thermal conductivity is filled in a space defined by the inner circumference of the metallic cover and the one end of the sheath. The space will be referred to as "an insulation space" hereinafter.

When the temperature sensor is installed in a passage through which exhaust gas flows, heat is received by the metallic cover, and the received heat is transferred via the insulator to the thermistor. This allows the temperature of the thermistor to change so that the electric character of the thermistor is changed. The change in the electrical characteristic of the thermistor is measured thereby as an electric signal, and the electric signal is sent to the control circuit via the electrode wires and the core wires. This permits the control circuit to measure the temperature of the exhaust gas based on the electric signal sent from the thermistor.

In particular, in the temperature sensor disclosed in the Patent Application Publication set forth above, in order to prevent heat escape from the insulator via the sheath, a space is provided between the insulator and the one end of the sheath to separate them.

The space provided between the insulator and the one end of the sheath however may cause the core wires to vibrate relative to the thermistor when the temperature sensor is vibrated. This may cause the damage of the electrode wires mounted in the thermistor, resulting the failure of the thermistor.

In order to avoid vibration of the core wires relative to the thermistor to thereby secure resistance against vibration, the insulator can be filled thoroughly within the insulation space.

In producing, in quantity, such a temperature sensor whose insulator is designed to be filled throughout the insulation space, during the process of feeding the insulator into the insulation space, sensor-to-sensor variation in the rate of insulator feeding may result. The sensor-to-sensor variation in the rate of insulator feeding may generate cavities within the insulation space of some of the mass produced temperature sensors; some of these mass produced temperature sensors have poor resistance against vibration.

Document US 6 130 598 A discloses a temperature sensor according to the preamble of claim 1. Specifically, there a temperature detecting apparatus and an automobile using the same are disclosed. The apparatus comprises a first metal pipe, first and second metal wires accommodated in the first metal pipe, at least one end of each wire being projected from one end of the first metal pipe, an insulator for keeping an electric insulation of the first metal pipe and the first and second metal wires in the first metal pipe, a temperature detecting element projecting out of one end of the first metal pipe and disposed between ends of the first and second metal wires, and a metal cap fitted to one end of the first metal pipe for covering the temperature detecting element, wherein the temperature detecting element is in a substantially flat shape or in a flat shape longer in the length in the direction between the first and second metal wires than the length in the direction at right angle thereto, and a portion of the metal cap opposite to the temperature detecting element is in a flat shape in the same direction in a shape similar to the temperature detecting element.

Document JP 2005 055254 A discloses a temperature sensor and its manufacturing method. The temperature sensor is equipped with the first housing having the closed tip, a thermistor held by an oxygen supply cement solid material on the tip side in the first housing and capable of detecting the temperature and outputting it as an electric signal, and a pair of lead wires having each an end connected to the thermistor, for taking out the electric signal from the thermistor to the outside of the housing. The oxygen supply cement solid material is formed by dispersing powder-shaped oxygen supply material comprising NiO in a solidified cement base material. A filling material comprises insulating powder and the powdery oxygen supply material comprising NiO dispersed in the insulating powder.

Document JP 6 229840 A discloses a thermistor temperature sensor. The sensor is provided with a metallic tube, a thermo-unit, and lead wires. The thermo-unit has insulating tubes, a thermistor element, and lead terminals, and is fixed in the tube with cement. In the rear section of the insulating tube of the thermo-unit, a cement storing space having a large gap against the tube is formed ahead of the connecting section of the lead terminals with lead wires.

In view of the background, an object of at least one aspect of the present invention is to provide temperature sensors and method of manufacturing them; these temperature sensors have sufficient resistance against vibration even if sensor-to-sensor variation in the rate of feeding an insulator into each of the temperature sensors occurs.

This object is achieved by a temperature sensor according to claim 1 and a manufacturing method according to claim 7. Advantageous further developments are as set forth in the respective dependent claims.

According to one aspect of the present invention, there is provided a temperature sensor. The temperature sensor includes a thermal sensitive element having a pair of electrodes coupled thereto, and a sheathed wiring member. The sheathed wiring member includes a pair of wires each with one end, and a lengthy sheath. The lengthy sheath has one end portion and covers the pair of wires such that the one end of each of the wires overhangs from an edge surface of the one end portion of the lengthy sheath. The one end of each of the wires is connected with a corresponding one of the electrodes. The temperature sensor includes a cover having a tubular wall with a closed end and an open end opposite thereto. The one end portion of the lengthy sheath is inserted in the cover via the open end thereof. An inner wall surface of the tubular wall of the cover and the edge surface of the one end portion of the lengthy sheath provide a first space therebetween. The thermal sensitive element, the pair of electrodes, and the one end of each of the wires are stored in the first space and covered with the tubular wall. At least part of an outer surface of the one end portion of the lengthy sheath opposing the inner wall surface of the tubular wall of the cover is formed with a recess. The recess is spaced at a given distance away from the edge surface of the one end portion of the lengthy sheath. The inner wall surface of the tubular wall of the cover and the recess provide a second space therebetween. The temperature sensor includes a first electric insulator filled thoroughly within the first space, and a second electric insulator filled within the second space.

According to another aspect of the present invention, there is provided a method of manufacturing a temperature sensor. The method includes preparing a temperature sensing member. The temperature sensing member includes a thermal sensitive element having a pair of electrodes coupled thereto, and a sheathed wiring member. The sheathed wiring member includes a pair of wires each with one end, and a lengthy sheath. The lengthy sheath has one end portion and covers the pair of wires such that the one end of each of the wires overhangs from an edge surface of the one end portion of the lengthy sheath. The one end of each of the wires is connected with a corresponding one of the electrodes. The method includes forming a recess in an outer surface of the one end portion of the lengthy sheath. The recess is spaced at a given distance away from the edge surface of the one end portion of the lengthy sheath. The method includes preparing a cover having a lengthy tubular wall with a closed end and an open end opposite thereto, and feeding a predetermined volume of an insulator into the cover so that the insulator is filled in the cover. The method includes inserting the temperature sensing member into the cover from the thermal sensitive element via the open end thereof until the edge surface of the one end portion of the lengthy sheath is in contact with a middle portion of an inner wall surface of the tubular wall of the cover in a longitudinal direction thereof so that:
a first space is formed between the inner wall surface of the cover and the edge surface of the one end portion of the lengthy sheath, and the thermal sensitive element, the pair of electrodes, and the one end of each of the wires are stored in the first space and covered with the tubular wall;
a major part of the insulator is filled thoroughly within the first space;
the thermal sensitive element, the pair of electrodes, and the one end of each of the wires are contained in the major part of the insulator;
a second space is formed between the inner wall surface of the cover and the recess; and
a remaining part of the insulator is suffused from the first space into the second space. The method includes joining, to the outer end portion of the lengthy sheath, an open end side of the tubular wall of the cover relative to the second space.

In the one and another aspect of the present invention, the second space of the temperature sensor works to receive an insulator (remaining part of the insulator) when the insulator (remaining part of the insulator) is suffused from the first space. This allows the first insulator to be filled thoroughly within the first space in which the temperature sensitive element, the electrodes, and the one ends of the wires are installed. This prevents the wires from vibrating relative to the thermal sensitive element even if the temperature sensor is vibrated, making it possible to avoid the failure of the thermal sensitive element due to physical factors.

### BRIEF DESCRIPTION OF THE DRAWINGS

Other objects and aspects of the invention will become apparent from the following description of embodiments with reference to the accompanying drawings in which:
Fig. 1 is a partially cross sectional view schematically illustrating an internal structure of a temperature sensor according to an embodiment of the present invention;
Fig. 2 is an enlarged longitudinal cross sectional view of a portion of the temperature sensor circled by A illustrated in Fig. 1.;
Fig. 3 is a cross sectional view taken on line B-B in Fig. 2;
Fig. 4 is a partially cross sectional view schematically illustrating a process of crimping one end of a sheath integrated with a thermistor and illustrated in Fig. 1 according to the embodiment of the present invention;
Fig. 5 is a cross sectional view taken on line C-C in Fig. 4;
Fig. 6 is a cross sectional view taken on line D-D in Fig. 4;
Fig. 7 is a view schematically demonstrating an insulator filling process according to the embodiment;
Fig. 8 is a view schematically demonstrating a press fitting process according to the embodiment;
Fig. 9 is a view schematically demonstrating a crimping process and laser welding process according to the embodiment;
Fig. 10 is an enlarged longitudinal cross sectional view of a portion of a temperature sensor according to the embodiment; this portion corresponds to the portion of the temperature sensor circled by A illustrated in Fig. 1; and
Fig. 11 is a cross sectional view taken on line E-E in Fig. 10.

### DETAILED DESCRIPTION OF EMBODIMENTS OF THE INVENTION

An embodiment of the present invention will be described hereinafter with reference to the accompanying drawings.

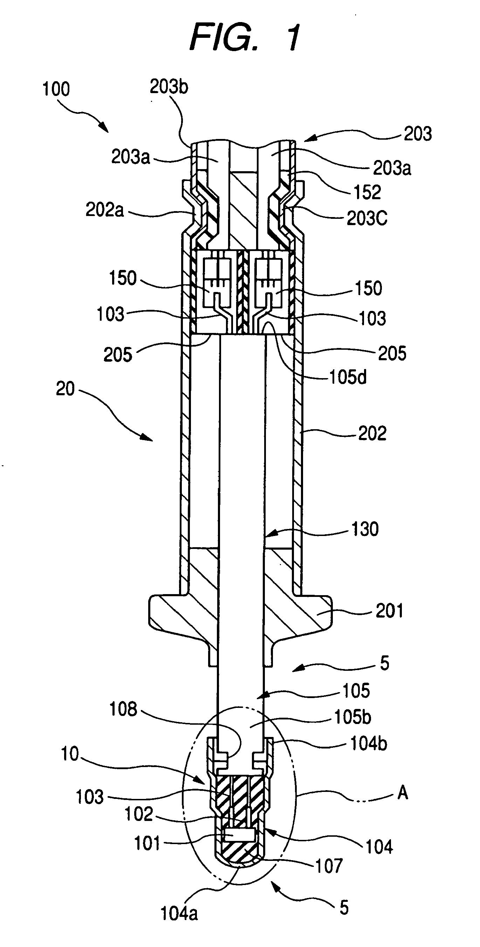

Referring to Fig. 1, there is provided a temperature sensor 100 applied to measure the temperature of exhaust gas discharged from an engine for vehicles.

The temperature sensor 100 consists essentially of a lengthy temperature sensing member 5 and a substantially cylindrical housing 20 for supporting and protecting the temperature sensing member 5.

The housing 20 is generally formed of a holder 201 having a lengthy opening therethrough, and a substantially annular metallic tube 202 one end of which is fixedly joined to one opposing end of the holder 201 by being crimped and/or welded thereto. This allows the opening and the inner hollow portion of the tube 202 to communicate with each other.

The temperature sensing member 5 is so disposed in the opening of the holder 201 and the tube 202 as to be aligned with the center of the housing 20 (holder 201 and the tube 202). One end portion of the temperature sensing member 5 projects from the other end of the holder 201.

The temperature sensing member 5 is provided at the tip end of its overhanging portion with a thermal sensitive head 10. The temperature sensing member 5 is also provided with a sheathed wiring member 130 coupled to the thermal sensitive head 10.

The temperature sensor 100 is arranged such that the thermal sensitive head 10 is located in a passage through which the exhaust gas discharged from the engine flows. The passage is formed inside of, for instance, a catalytic converter for an exhaust emission control system of the engine or an exhaust pipe thereof.

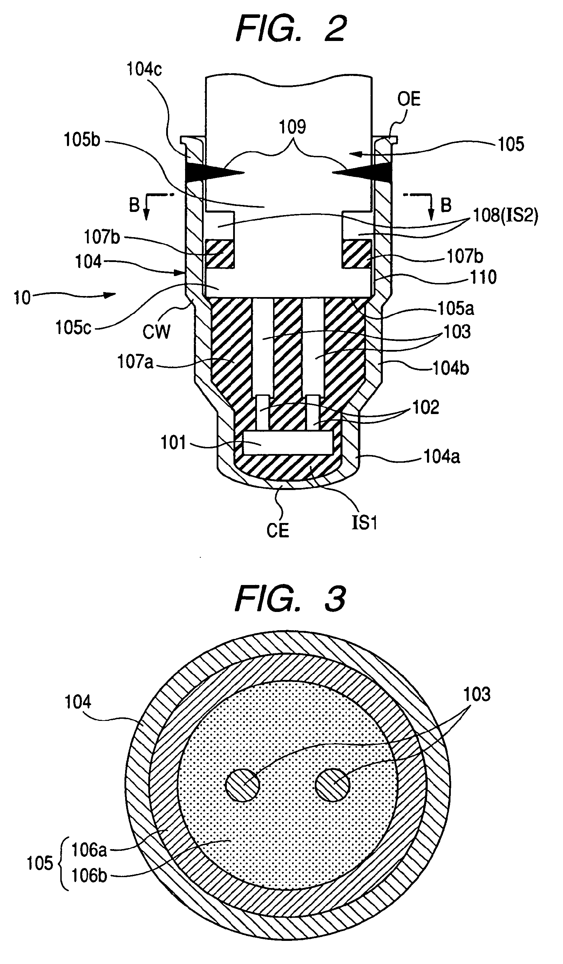

Referring to Fig. 2, the thermal sensitive head 10 consists of a thermistor 101, a pair of electrode wires 102, a metallic cover 104, a first electric insulator 107a, and a second electric insulator 107b.

The thermistor 101 is used as an example of thermal sensitive elements. The thermistor 101 is, for example, a thermally sensitive resistor whose resistance varies as the temperature changes.

The pair of electrode wires 102 is made of, for example, platinum. One ends of the pair of electrode wires 102 are mounted in the thermistor 101 such that the remaining portions thereof are opposite to each other with a predetermined interval therebetween.

The sheathed wiring member 130 is composed of a pair of core wires 103 and a substantially cylindrical pin or post like sheath 105. Each of the core wires 103 is made of, for example, stainless steel, and has a substantially circular shape in its lateral cross section. The core wires 103 are covered with the sheath 105 by which they are electrically insulated.

One end of one of the core wires 103 projecting from a first edge surface 105a of one end portion 105b of the sheath 105 is connected with one of the pair of electrode wires 102. Similarly, one end of the other of the core wires 103 projecting from the first edge surface 105a of the one end portion 105b of the sheath 105 is connected with the other of the pair of electrode wires 102. For example, the one ends of the core wires 103 and the electrode wires 102 are joined to each other by laser welding or resistance welding.

The metallic cover 104 is configured to completely cover the thermistor 101, the pair of electrode wires 102, the pair of core wires 103, and the one end portion 105b of the sheath 105 so as to protect them.

For example, a stainless steel plate is prepared, and deep drawing is applied to the stainless steel plate so that the metallic cover 104 having an inner hollow cylindrical shape with one closed end CE is formed.

The metallic cover 104 has a ttiree-stepped cylindrical shape. Specifically, the metallic cover 104 has .a first cylindrical step wall 104a with the closed end CE, and a second cylindrical step wall 104b continuing therefrom and having a diameter longer than that of the first cylindrical step wall 104a. The metallic cover 104 has a third cylindrical step wall 104c continuing from the second cylindrical step wall 104b and having a diameter longer than the that of the second cylindrical step wall 104b.

For example, the thermistor 101 has a plate-like shape, and is made of, for instance, sinter-formed Cr(Chromium)-Mn(Manganese) based semiconductor materials. The thermistor 101 is so installed in the first cylindrical step wall 104a as to be arranged at the center thereof. The diameter of the first cylindrical step wall 104a is determined to be as small as possible within the limits in which the thermistor 101 is separated from the inner circumference of the first cylindrical step wall 104a.

Because the thermistor 101 is located as close as possible to the inner circumference of the first cylindrical step wall 104a, heat loss during heat transfer between the metallic cover 104 and the thermistor 101 is reduced.

The metallic cover 104, that is, the third cylindrical step wall 104c has one open end OE opposite the closed end CE. The one end portion 105b of the sheathed wiring member 130 is pressed into the third cylindrical step wall 104c via the open end OE with a predetermined clearance 110 therebetween. The outer periphery of the first edge surface 105a of the sheath 105 is fitted in the inner peripheral surface of a connection wall CW continuously connecting between the second cylindrical step wall 104b and the third cylindrical step wall 104c.

In addition, the outer circumference of the one end portion 105b of the sheath 105 covered with the cylindrical step wall 104c of the metallic cover 104 is formed with an annular recess 108. The annular recess 108 is spaced at a given distance away from the first edge surface 105a of the one end portion 105b of the sheath 105, and configured to communicate with the clearance 110. This farms a radially projecting head 105c at the tip of the one end portion 105b of the sheath 105.

At the open end side of the metallic cover 104, an annular welded joint 109 is formed to fixedly couple the cylindrical step wall 104c and the one end portion 105b of the sheath 105.

The first electric insulator 107a is made of, for example, alumina, and filled within a space ISI defined by the inner circumference of the metallic cover 104 (first and second cylindrical step walls 104a and 104b) and the first edge surface 105a of the sheath 105.

The space IS1 within which the first electric insulator 107a is filled will be referred to as "first insulation space IS1" hereinafter.

The second electric insulator 107b is made of, for example, the same material as the first electric insulator 107a. The second electric insulator 107b is filled within at least part of a space IS2 defined by the annular recess 108 and the inner circumference of the third cylindrical step wall 104c of the metallic cover 104.

Specifically, the second electric insulator 107b is located in the space IS2 so as to be mounted on the radially projecting head 105c of the one end portion 105b of the sheath 105. The space IS2 defined by the annular recess 108 and the inner circumference of the third cylindrical step wall 104c of the metallic cover 104 will be referred to as "second insulation space IS2" hereinafter.

In other words, as clearly illustrated in Fig. 2, the first and second electric insulators 107a and 3.07b are partitioned by the radially projecting head 105c of the one end portion 105b of the sheath 105.

The temperature sensor 100 is designed such that the first and second insulation spaces IS1 and IS2 have predetermined volumes V1 and V2, respectively; the ratio of the volume V1 to the volume V2 is 1:0.2 (1/0.2=5).

Referring to Fig. 3, the sheath 105 is composed of a substantially cylindrical metallic tube 106a longitudinally extending around the pair of core wires 103, and a composite compact 106b filled in the space between the inner wall surface of the tube 106a and the pair of core wires 103. The other ends of the pair of core wires 103 project from a second edge surface 105d of the sheath 105 opposite the first edge surface 105a.

The composite compact 106b is formed by:
inserting electrically insulating material powders, such as magnesia powders, into the inner space of the tube 106a around each of the pair of core wires 103; and
subjecting the tube 106a in which the magnesia powders are filed to drawing, thereby forming the composite compact 106b between the inner wall surface of the tube 106a and each of the core wires 103.

With the configuration of the sheath 105, the first and second edge surfaces 105a and 105d of the sheath 105 around each core wire 103 are closed; this prevents foreign particles, such as hydrocarbons (HC) and/or carbon monoxides (CO), contained in the exhaust gas from entering into the interior of the sheath 105.

The sheathed wiring member 130 is disposed in the opening of the holder 201 and the tube 202 such that the one end portion 105b of the sheath 105 projects from the holder 201.

The temperature sensor 100 further consists of a pair of terminals 150, a rubber bush 152, and a wiring cable 203. The wiring cable 203 is composed of a pair of leads 203a and a substantially cylindrical sheath 203b with which the leads 203a are covered to be electrically insulated.

The rubber bush 152 is so inserted in one end of the sheath 203b as to be mounted on the inner circumference of the one end of the sheath 203b. One ends of the pair of leads 203a are connected with a control circuit, such as an electronic control unit (ECU) (not shown).

The other end of the tube 202 opposite the holder side end thereof is farmed as a connector 202a, and the one end of the sheath 203b is formed as a connector 203c. Specifically, the connector 203c of the sheath 203b is pressed to be fitted into the connector 202a of the tube 202 so that the connector 203c is airtightly engaged with the connector 202a.

One ends of the pair of terminals 150 are connected with the other ends of the pair of core wires 103 projecting from the second edge surface 105d of the sheath 105.

The paired terminals 150 are so disposed within the tube 202 as to be close to the connector 202a. Specifically, when the wiring cable 203 and the tube 202 of the temperature sensor 100 are joined to each other by the engagement of their connectors 202a and 203c, the other ends of the pair of leads 203a are connected with the pair of terminals 150. This establishes electrical connection between the thermistor 101 and the control circuit via the electrode wires 102, the core wires 103, the terminals 150, and the leads 203a.

The joint portions between the pair of lead wires 203a and the pair of core wires 103 via the pair of terminals 150 are each covered with a resin tube 205 made of, for example, a heat-resistant resin. The resin tube 205 works to protect the joint portions.

Next, schematic operations of the temperature sensor 100 will be described hereinafter.

While exhaust gas discharged from the engine flows through the passage formed inside of the catalytic converter or the exhaust pipe, heat is received by the metallic cover 104, and the received heat is transferred via the first electric insulator 107a to the thermistor 101. This allows the temperature of the thermistor 101 to change so that the resistance of the thermistor 101 is changed. The change in the resistance of the thermistor 101 is measured thereby as an electric signal, and the electric signal is sent to the control circuit via the electrode wires 1.02 and the core wires 103. This permits the control circuit to measure the temperature of the exhaust gas based on the electric signal sent from the thermistor 101.

Next, a method of manufacturing the temperature sensor 100 will be described hereinafter.

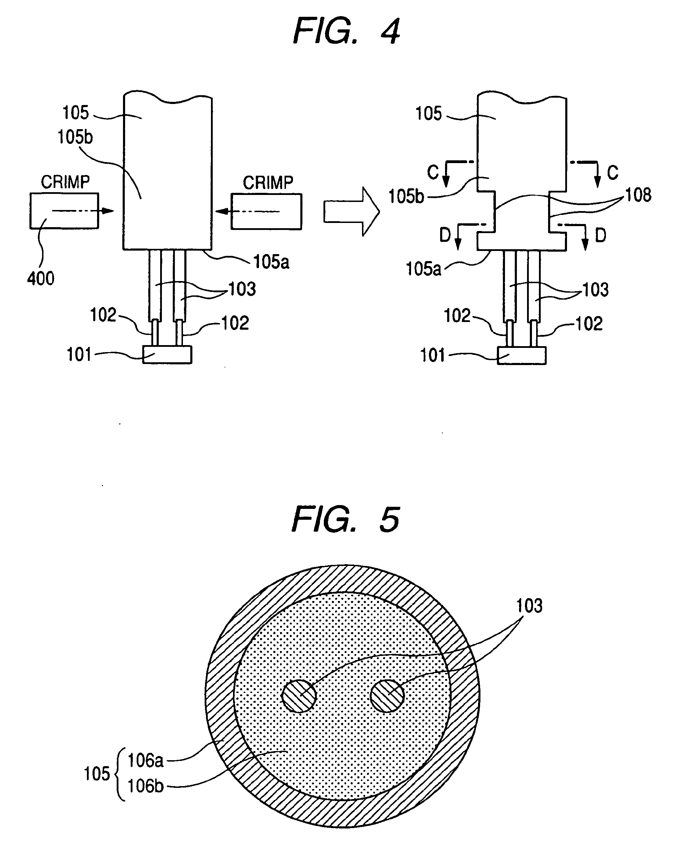

Referring to Fig. 4, the electrode wires 102 mounted in the thermistor 1.01 are respectively joined to the one ends of the pair of core wires 103 by laser welding or resistance welding.

Thereafter, in an annular recess forming process, a swaging tool is prepared. For example, the swaging tool has a pair of dies 400 each has a substantially semicylindrical surface. The dies 400 are arranged such that the semicylindrical surfaces are located on either side of an annular part of the outer circumference of the one end portion 105b of the sheath 105; this annular part is located away from the first edge surface 105a of the sheath 105.

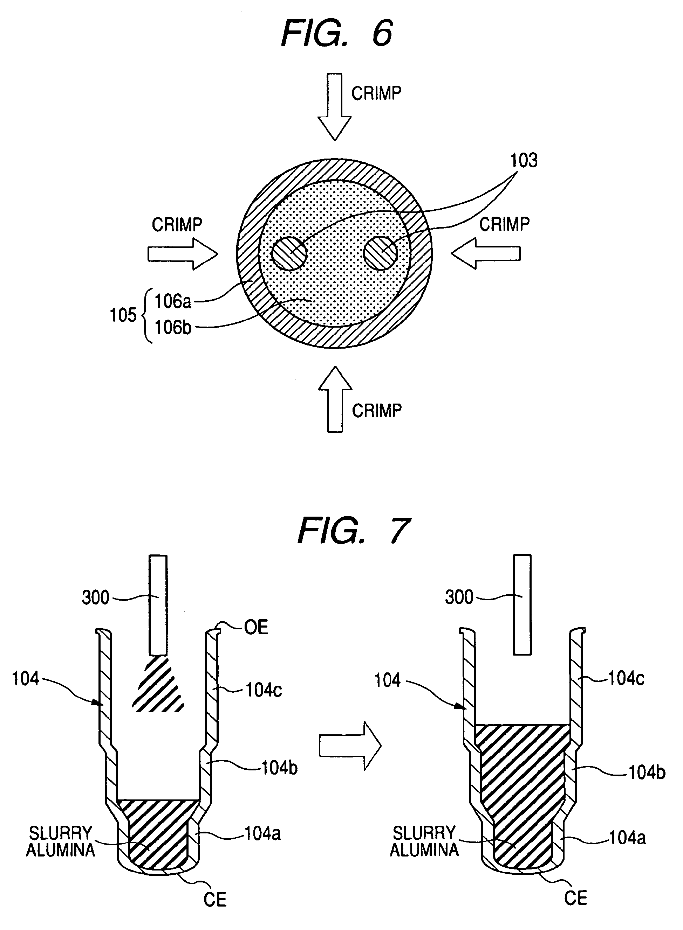

The swaging tool works to move the dies 400 towards each other to crimp, by the semicylindrical surfaces, the annular part of the outer circumference of the one end portion 105b of the sheath 105. This uniformly reduces the diameter of the annular part of the outer circumference of the one end portion 105b of the sheath 105 to thereby form the annular recess 108 in the one end portion 105b thereof (see Figs. 5 and 6).

Next, in an insulator filling process, the metallic cover 104, which has been produced using a stainless steel set forth above, and a dispenser with a needle 300 are prepared. The dispenser is designed to contain alumina in an aqueous slurry as the first and second electric insulators 107a and 107b and to feed, from the needle 300, the contained alumina into the metallic cover 104 through the open end OE thereof. Note that the slurry alumina (slurry insulator 107) to be sprayed from the needle 300 is for instance formed by adding, to alumina, pure water and dispersant to modify the viscosity of the mixture of the alumina and pure water (see Fig. 7). In place of the alumina, silica, magnesia, or another material can be used.

The injection volume V3 of the slurry alumina from the needle 300 of the dispenser is determined to be 110 percent of the volume V1 of the first insulation space IS1. with the tolerance of ±5 percent of the volume V1. This allows, in producing the temperature sensor 100 in volume, even if sensor-to-sensor variation in the rate of insulator feeding from the needle 300 occurs, the slurry alumina to be filled thoroughly within the first insulation space IS1 of each of the mass produced temperature sensors 100.

After the completion of the annular recess forming process, the sheathed wiring member 130 integrated with the thermistor 101 is inserted, from its thermistor side, into the slurry-alumina filled metallic cover 104 such that the thermistor 101, the electrode wires 102, and the core wires 103 are kept noncontact with the inner circumference of the metallic cover 104.

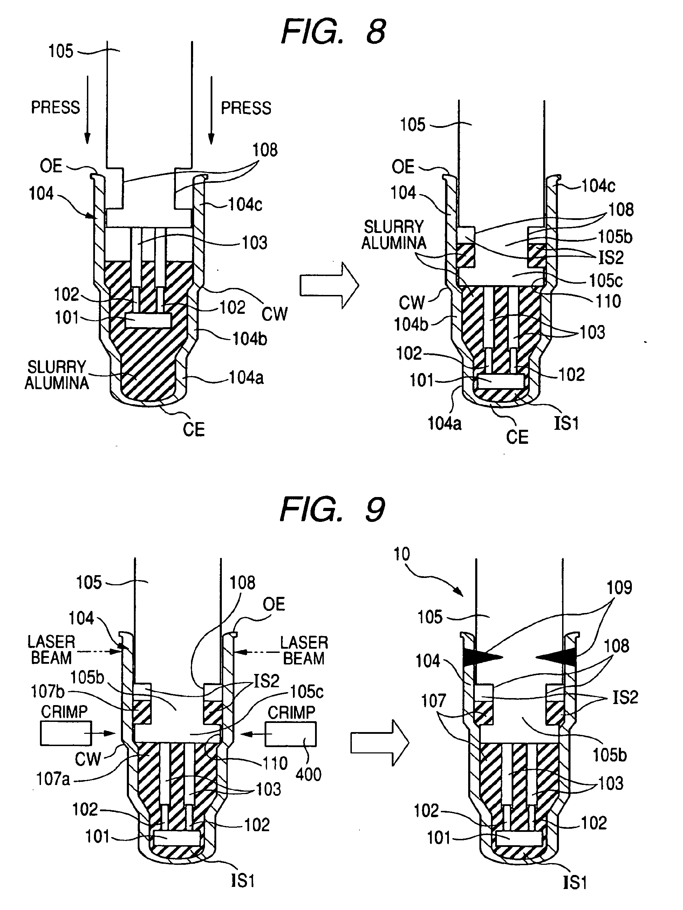

Thereafter, when the one end portion 105b of the sheathed wiring member 130 of the is close to the open end OE of the metallic cover 104, the one end portion 105b of the sheathed wiring member 130 is pressed into the metallic cover 104 from the open end OE toward the closed end CE thereof (see Fig. 8). The press fitting is carried out until the outer periphery of the first edge surface 105a of the sheath 105 is fitted in the inner peripheral surface of the connection wall CW continuously connecting between the second cylindrical step wall 104b and the third cylindrical step wall 104c.

The outer periphery of the first edge surface 105a of the sheath 105 fitted in the inner peripheral surface of the connection wall, CW of the metallic cover 104 provides the first insulation space IS1 defined between the first edge surface 105a of the sheath 105 and the inner circumference of the metallic cover 104. The outer periphery of the first edge surface 105a of the sheath 105 fitted in the inner peripheral surface of the connection wall CW of the metallic cover 104 also allows the slurry alumina to be filled thoroughly within the first insulation space IS1 (see Fig. 8).

The press fitting of the sheath 105 in the inner peripheral surface of the connection wall CW of the metallic cover 104 further allows the annular recess 108 to be completely covered with the third cylindrical step wall 104c of the metallic cover 104. This forms the second insulation space IS2 between the annular recess 108 and the inner circumference of the third cylindrical step wall 104c of the metallic cover 104.

As described above, the clearance 110 is ensured between the head 105c of the one end portion 105b of the sheath 105 and the inner circumference of the third cylindrical step wall 104c of the metallic cover 104.

For this reason, during the press fitting of the sheath 105 in the inner peripheral surface of the connection wall CW of the metallic cover 104, a part of the slurry alumina filled in the metallic cover 104 is suffused via the clearance 110 into the second insulation space IS2 to be contained therein (see Fig. 8). The volume of the part of the slurry alumina to be charged in the second insulation space IS2 during the press fitting process is determined as a difference between the injection volume V3 of the slurry alumina and the volume V1 of the first insulation space IS1.

After the completion of the press fitting process, an intermediate product integrated with the thermistor 101, the sheathed wiring member 130, and the metallic cover 104 is dried at a high temperature. The drying process evaporates water contained in the slurry alumina filled within each of the first and second insulation spaces IS and IS2; this results that the contained slurry alumina is dried to become a powder alumina (powder insulator 107). Because the powder alumina is substantially equal in volume to the slurry alumina, no cavities are generated in the first insulation space IS 1.

Next, as illustrated in Fig. 9, the dies 400 of the swaging tool are arranged such that the semicylindrical surfaces are located on either side of an annular part of the outer circumference of the second cylindrical step wall 104b radially adjacent to the head 105c of the sheath 105 across the clearance 110.

The swaging tool works to move the dies 400 towards each other to crimp, by the semicylindrical surfaces, the annular part of the outer circumference of the second cylindrical step wall 104b. This reduces the radial width of the clearance 110 to be sufficiently smaller than the grain size of the powder alumina. This prevents grains of the powder alumina from moving from the first insulation space IS1 to the second insulation space IS2 via the clearance 110.

In addition, a laser beam is irradiated to an annular part of the outer circumference of the third cylindrical step wall 104c at the open end side thereof relative to the second insulation space IS2 so as to form an annular welded joint 109; this annular welded joint 109 fixedly couples the cylindrical step wall 104-c and the one end portion 105b of the sheath 105. Another welding method can be used to fixedly join the cylindrical step wall 104c and the one end portion 105b of the sheath 105.

Thereafter, each of the powder alumina contained in each of the first and second insulation space IS1 and IS2 is fired by heating to thereby form the first and second electric insulators 107a and 107b within the first and second insulation spaces IS1 and IS2, respectively. This results that the thermal sensitive head 10 is completed.

For example, after the process of producing the thermal sensitive head 10, as set forth above, the wiring cable 203 and the tube 202 of the temperature sensor 100 are joined to each other by the engagement of their connectors 202a and 203c. This allows the other ends of the core wires 103 to be connected with the leads 203a of the wiring cable 230 via the terminals 150, and the joint portions between the lead wires 203a and the core wires 103 via the terminals 150 are each covered with the resin tube 205.

This results that the temperature sensor 100 illustrated in Fig. 1 is completed.

As described above, the thermistor sensor 100 is provided with:
the first electric insulator 107a filled within the first insulation space IS1 defined by the first edge surface 105a of the sheath 105 and the inner circumference of the first and second cylindrical step walls 104a and 104b;and
the second electric insulator 107b filled within the second insulation space IS2 defined by the annular recess 108 and the inner circumference of the third cylindrical step wall 104c.

The first and second electric insulators 107a and 107b are formed by:
feeding slurry alumina into the metallic cover 104 to fill it therewithin, the volume of which is greater than, that of the first insulation space IS1;
causing part of the slurry alumina filled within the metallic cover 104 to overspread to be escaped via the clearance 110 into the second insulation space IS2 so that the part of the slurry alumina is contained in the second insulation space IS2; and
drying and firing the slurry alumina filed within the first insulation space IS1 and the part of the slurry alumina contained in the second insulation space IS2.

Thus, in producing the temperature sensor 100 in volume, even if sensor-to-sensor variation in the rate of insulator feeding occurs, the slurry alumina is filled thoroughly within the first insulation space IS1 af each of the mass produced temperature sensors 100 so that no cavities are generated in the first electric insulator 107a.

This prevents the core wires 103 from vibrating relative to the thermistor 101 even if the temperature sensor 100 is vibrated, making it possible to avoid the failure of the thermistor 101 due to physical factors.

In addition, when the part of the slurry alumina filled within the metallic cover 104 is suffused, the clearance 110 and the second insulation space IS2 allow the suffused part of the slurry alumina to be escaped via the clearance 110 into the second insulation space IS2. This makes it possible to avoid the suffused slurry alumina from overflowing out of the metallic cover 104.

In the embodiment, the volume V2 of the second insulator space IS2 is 20 percent of the volume V1 of the first insulator space IS1, but the present invention is not limited to the structure.

Specifically, the volume V2 of the second insulator space IS2 can be determined within the range from 3 percent of the volume V1 of the first insulator space IS1 to 50 percent thereof.

If the volume V2 of the second insulator space IS2 were determined to be lower than 3 percent of the volume V1 of the first insulator space IS1, cavities would appear in the first electric insulator 107a, or the second electric insulator 107b would interfere with the joint portion between the metallic cover 104 and the one end portion 105b of the sheath 105.

If the volume V2 of the second insulator space IS2 were determined to be higher than 50 percent of the volume V1 of the first insulator space IS1, it would be difficult to maintain good rigidity of the sheath 105. This may reduce the mechanical length of the sheath 105.

However, as set forth above, when the volume V2 of the second insulator space IS2 is determined within the range from 3 percent of the volume V1 of the first insulator space IS1 to 50 percent thereof, it is possible to avoid the development of the problems set forth above.

In the method of manufacturing the temperature sensor 100, an annular part of the outer circumference of the one end portion 105b of the sheath 105 is crimped by the semicylindrical surfaces of the dies 400 to form the annular recess 108 in the one end portion 105b thereof, but the present invention is not limited to the crimping process.

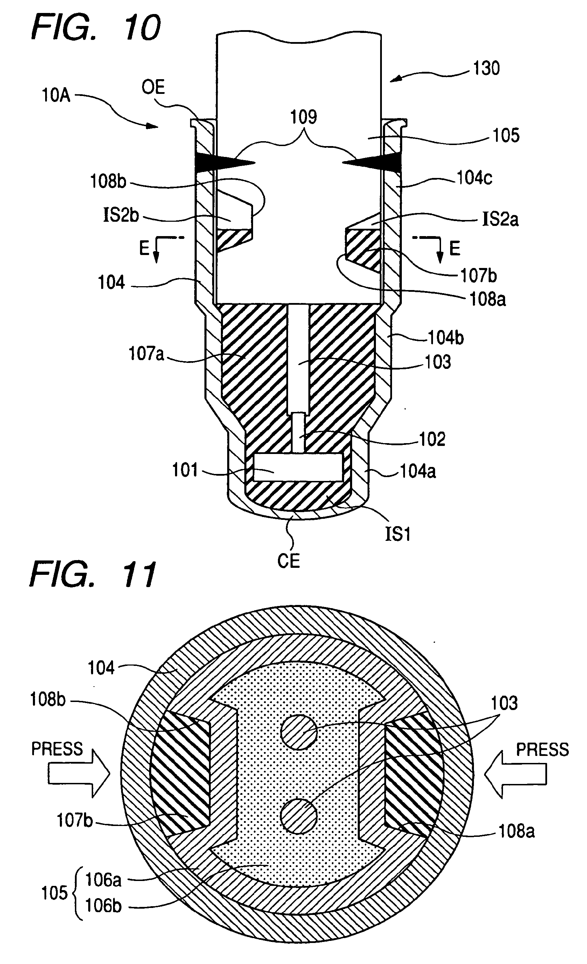

Specifically, as illustrated in Figs. 10 and 11, in a thermal sensitive head 10A of a modified temperature sensor, the outer circumference of the one end portion 105b of the sheath 105 is formed with one or more dimples 108a. For example, in the modified temperature sensor, a pair of dimples 108a and 108b are formed in the outer circumference of the one end portion 105b of the sheath 105.

Each of the dimples 108a and 108b is located away from the first edge surface 105a of the one end portion 105b of the sheath 105, and configured to communicate with the clearance 110. This forms a head 105e at the tip of the one end portion 105b of the sheath 105.

A second insulation space IS2a is defined by the corresponding dimple 108a and the inner circumference of the third cylindrical step wall 104c of the metallic cover 104, and a third insulation space IS2b is defined by the corresponding dimple 108b and the inner circumference of the third cylindrical step wall 104c of the metallic cover 104.

The second electric insulator 1,07b is located in each of the second and third insulation spaces IS2a and IS2b so as to be mounted on the head 105e of the one end portion 105b of the sheath 105.

In a dimple forming process according to the modified temperature sensor, a pressurizing mechanism having a pair of dies is prepared. Each of the dies has a substantially rectangular surface. The dies are arranged such that the rectangular surfaces are located on either side of an annular part of the outer circumference of the one end portion 105b of the sheath 105 at different distances from the first edge surface 105a of the sheath 105.

The pressing mechanism works to move the dies towards each other to press, by the rectangular surfaces, the annular part of the outer circumference of the one end portion 105b of the sheath 105. This forms the pair of dimples 108a and 108b in the one end portion 105b thereof (see Figs. 5, 10, and 11).

As illustrated in Fig. 11, the annular part of the outer circumference of the one end portion 105b of the sheath 105 is preferably pressed from either side thereof in the direction orthogonal to the direction of alignment of the pair of the core wires 103. This reduces the effects of the inward deformation of the composite component 106b on the interval between the core wires 103, maintaining the core wires 103 away from each other, making it possible to prevent electric breakdowns in the sheathed wiring member 130.

In this modification, the sum of the volumes of the second and third insulation spaces IS2a and IS2b can be determined within the range from 3 percent of the volume V1 of the first insulator space IS1 to 50 percent thereof.

While there has been described what is at present considered to be the embodiment and its modifications of the present invention, it will be understood that various modifications which are not described yet may be made therein, and it is intended to cover all such modications covered by the appended claims.

In a temperature sensor, a thermal sensitive element, a pair of electrodes, one end of each of wires, and one end portion of a lengthy sheath are covered with a tubular wall of a cover. An inner wall surface of the tubular wall of the cover and an edge surface of the one end portion of the sheath provide a first space therebetween. At least part of an outer surface of the one end portion of the sheath opposing the inner wall surface of the tubular wall of the cover is formed with a recess spaced at a given distance away from the edge surface. The inner wall surface of the tubular wall of the cover and the recess provide a second space therebetween. A first electric insulator is filled thoroughly within the first space, and a second electric insulator is filled within the second space.

## Claims

1. A temperature sensor (100) comprising:
a thermal sensitive element (5) having a pair of electrodes (102) coupled thereto;
a sheathed wiring member (130) comprising: a pair of wires (103) each with one end; and a lengthy sheath (105) having one end portion (105b) and covering the pair of wires (103) such that the one end of each of the wires (103) overhangs from an edge surface (105a) of the one end portion (105b) of the lengthy sheath (105), the one end of each of the wires (103) being connected with a corresponding one of the electrodes (102); and
a cover (104) having a tubular wall (104a, 104b, 104c) with a closed end (CE) and an open end (OE) opposite thereto, the one end portion (105b) of the lengthy sheath (105) being inserted in the cover (104) via the open end (OE) thereof, an inner wall surface of the tubular wall (104a, 104b, 104c) of the cover (104) and the edge surface (105a) of the one end portion (105b) of the lengthy sheath (105) providing a first space (IS1) therebetween, the thermal sensitive element (5), the pair of electrodes (102), and the one end of each of the wires (103) being stored in the first space (IS1) and covered with the tubular wall (104a, 104b, 104c),
**characterized in that**
at least part of an outer surface of the one end portion (105b) of the lengthy sheath (105) opposing the inner wall surface of the tubular wall (104a, 104b, 104c) of the cover (104) is formed with a recess (108), the recess (108) being spaced at a given distance away from the edge surface (105a) of the one end portion (105b) of the lengthy sheath (105), the inner wall surface of the tubular wall (104a, 104b, 104c) of the cover (104) and the recess (108) providing a second space (IS2) therebetween; and
that the temperature sensor (100) further comprises a first electric insulator (107a) filled thoroughly within the first space (IS1); and
a second electric insulator (107b) filled within the second space (IS2).

2. A temperature sensor (100) according to claim 1, wherein the one end portion (105b) of the lengthy sheath (105) has a substantially cylindrical shape so that the outer surface thereof is an outer circumference, and the recess (108) is an annular recess formed in the outer circumference of the one end portion (105b) of the lengthy sheath (105).

3. A temperature sensor (100) according to claim 1, wherein the recess (108) is at least a pair of dimples (108a) formed in the outer surface of the one end portion (105b) of the lengthy sheath (105).

4. A temperature sensor (100) according to claim 3, wherein the pair of dimples (108a) are aligned opposing each other, a direction of alignment of the pair of core wires (103) and that of alignment of the pair of dimples (108a) are substantially orthogonal to each other.

5. A temperature sensor (100) according to any one of claims 1 to 4, wherein a clearance (110) is formed between the outer surface of the one end portion (105b) of the lengthy sheath (105) and the inner wall surface of the tubular wall (104a, 104b, 104c) of the cover (104), and the clearance (110) communicates with both the first space (IS1) and the second space (IS2).

6. A temperature sensor (100) according to any one of claims 1 to 5, wherein the first space (IS1) has a first volume (V1), and the second space (IS2) has a second volume (V2), the second volume (V2) is determined within a range from 3 percent of the first volume (V1) to 50 percent thereof.

7. A method of manufacturing a temperature sensor (100), the method comprising:
preparing a temperature sensing member, the temperature sensing member comprising: a thermal sensitive element (5) having a pair of electrodes (102) coupled thereto; and a sheathed wiring member (130), the sheathed wiring member (130) comprising: a pair of wires (103) each with one end; and a lengthy sheath (105) having one end portion (105b) and covering the pair of wires (103) such that the one end of each of the wires (103) overhangs from an edge surface (105a) of the one end portion (105b) of the lengthy sheath (105), the one end of each of the wires (103) being connected with a corresponding one of the electrodes (102); and
preparing a cover (104) having a lengthy tubular wall (104a, 104b, 104c) with a closed end (CE) and an open end (OE) opposite thereto;
**characterized in that** the method further comprises
forming a recess (108) in an outer surface of the one end portion (105b) of the lengthy sheath (105), the recess (108) being spaced at a given distance away from the edge surface (105a) of the one end portion (105b) of the lengthy sheath (105);
feeding a predetermined volume of an insulator (107a, 107b) into the cover (104) so that the insulator (107a, 107b) is filled in the cover (104);
inserting the temperature sensing member into the cover (104) from the thermal sensitive element (5) via the open end (OE) thereof until the edge surface (105a) of the one end portion (105b) of the lengthy sheath (105) is in contact with a middle portion of an inner wall surface of the tubular wall (104a, 104b, 104c) of the cover (104) in a longitudinal direction thereof so that:
a first space (IS1) is formed between the inner wall surface (104a, 104b, 104c) of the cover (104) and the edge surface (105a) of the one end portion (105b) of the lengthy sheath (105), the thermal sensitive element (5), the pair of electrodes (102), and the one end of each of the wires (103) being stored in the first space (IS1) and covered with the tubular wall (104a, 104b, 104c);
a major part of the insulator (107a) is filled thoroughly within the first space (IS1);
the thermal sensitive element (5), the pair of electrodes (102), and the one end of each of the wires (103) are contained in the major part of the insulator (107a);
a second space (IS2) is formed between the inner wall surface of the cover (104) and the recess (108); and
a remaining part of the insulator (107b) is suffused from the first space (IS1) into the second space (IS2); and
joining, to the outer end portion (105b) of the lengthy sheath (105), an open end side of the tubular wall (104a, 104b, 104c) of the cover (104) relative to the second space (IS2).

8. A method of manufacturing a temperature sensor (100) according to claim 7, wherein the one end portion (105b) of the lengthy sheath (105) has a substantially cylindrical shape so that the outer surface thereof is an outer circumference, and the recess (108) is an annular recess formed in the outer circumference of the one end portion (105b) of the lengthy sheath (105).

9. A method of manufacturing a temperature sensor (100) according to claim 7, wherein the recess forming step forms, as the recess (108), at least a pair of dimples (108a) in the outer surface of the one end portion (105b) of the lengthy sheath (105).

10. A method of manufacturing a temperature sensor (100) according to claim 9, wherein the pair of dimples (108a) are aligned opposing each other, a direction of alignment of the pair of core wires (103) and that of alignment of the pair of dimples (108a) are substantially orthogonal to each other.

11. A method of manufacturing a temperature sensor (100) according to any one of claims 7 to 10, wherein the inserting step inserts the temperature sensing member (5) into the cover (104) from the thermal sensitive element via the open end (OE) thereof with a clearance (110) being kept between the outer surface of the one end portion (105b) of the lengthy sheath (105) and the inner wall surface of the tubular wall (104a, 104b, 104c) of the cover (104), the clearance (110) communicating with both the first space (IS1) and the second space (IS2), and
the remaining part of the insulator (107b) is suffused into the second space (IS2) from the first space (IS1) via the clearance (110).

12. A method of manufacturing a temperature sensor (100) according to any one of claims 7 to 11, wherein the first space (IS1) has a first volume (V1), and the second space (IS2) has a second volume (V2), the second volume (V2) is determined within a range from 3 percent of the first volume (V1) to 50 percent thereof.

## Patentansprüche

1. Temperatursensor (100) mit:
einem temperaturempfindlichen Element (5), das ein Paar von Elektroden (102) aufweist, die daran gekoppelt sind,
einem ummantelten Leitungselement (130), das umfasst: ein Paar von Leitungen (103), von denen jede ein Ende aufweist, und eine längliche Ummantelung (105), die einen Endabschnitt (105b) aufweist und das Paar von Leitungen (103) derart abdeckt, dass das eine Ende jeder der Leitungen (103) von einer Randoberfläche (105a) des einen Endabschnitts (105b) der länglichen Ummantelung (105) hervorsteht, wobei das eine Ende jeder der Leitungen (103) mit einer entsprechenden der Elektroden (102) verbunden ist, und
einer Abdeckung (104), die eine rohrförmige Wand (104a, 104b, 104c) mit einem geschlossenen Ende (CE) und einem offenen Ende (OE), das entgegengesetzt hierzu ist, aufweist, wobei der eine Endabschnitt (105b) der länglichen Ummantelung (105) in die Abdeckung (104) über das zugehörige offene Ende (OE) eingeführt wird, wobei eine Innenwandoberfläche der rohrförmigen Wand (104a, 104b, 104c) der Abdeckung (104) und die Randoberfläche (105a) des einen Endabschnitts (105b) der länglichen Ummantelung einen ersten Raum (IS1) dazwischen bereitstellen, wobei das temperaturempfindliche Element (5), das Paar von Elektroden (102) und das eine Ende jeder der Leitungen (103) in dem ersten Raum (IS1) untergebracht sind und mit der rohrförmigen Wand (104a, 104b, 104c) abgedeckt sind,
**dadurch gekennzeichnet, dass**
zumindest ein Teil einer Außenoberfläche des einen Endabschnitts (105b) der länglichen Ummantelung (105), der der Innenwandoberfläche der rohrförmigen Wand (104a, 104b, 104c) der Abdeckung gegenüberliegt, mit einer Vertiefung (108) ausgebildet ist, wobei die Vertiefung (108) um eine vorgegebene Entfernung von der Randoberfläche (105a) des einen Endabschnitts (105b) der länglichen Ummantelung (105) beabstandet ist, wobei die Innenwandoberfläche der rohrförmigen Wand (104a, 104b, 104c) der Abdeckung (104) und die Vertiefung (108) einen zweiten Raum (IS2) dazwischen bereitstellen, und
dass der Temperatursensor (100) ferner einen ersten elektrischen Isolator (107a) umfasst, der vollständig in den ersten Raum (IS1) eingefüllt ist, und
einen zweiten elektrischen Isolator (107b) umfasst, der in den zweiten Raum (IS2) eingefüllt ist.

2. Temperatursensor (100) nach Anspruch 1, wobei der eine Endabschnitt (105b) der länglichen Ummantelung (105) eine im Wesentlichen zylindrische Form aufweist, so dass die zugehörige Außenoberfläche ein Außenumfang ist, wobei die Vertiefung (108) eine ringförmige Vertiefung ist, die in dem Außenumfang des einen Endabschnitts (105b) der länglichen Ummantelung (105) ausgebildet ist.

3. Temperatursensor (100) nach Anspruch 1, wobei die Vertiefung (108) zumindest ein Paar von Einsackstellen (108a) ist, die in der Außenoberfläche des einen Endabschnitts (105b) der länglichen Ummantelung (105) ausgebildet sind.

4. Temperatursensor (100) nach Anspruch 3, wobei das Paar von Einsackstellen (108a) zueinander entgegengesetzt ausgerichtet ist, wobei eine Richtung einer Ausrichtung des Paares von Kerndrähten (103) und die einer Ausrichtung des Paares von Einsackstellen (108) im Wesentlichen orthogonal zueinander sind.

5. Temperatursensor (100) nach einem der Ansprüche 1 bis 4, wobei ein Freiraum (110) zwischen der Außenoberfläche des einen Endabschnitts (105b) der länglichen Ummantelung (105) und der Innenwandoberfläche der rohrförmigen Wand (104a, 104b, 104c) der Abdeckung (104) ausgebildet ist, wobei der Freiraum (110) mit sowohl dem ersten Raum (IS1) als auch dem zweiten Raum (IS2) in Verbindung steht.

6. Temperatursensor (100) nach einem der Ansprüche 1 bis 5, wobei der erste Raum (IS1) ein erstes Volumen (V1) aufweist und der zweite Raum (IS2) ein zweites Volumen (V2) aufweist, wobei das zweite Volumen (V2) in einem Bereich von 3 Prozent des ersten Volumens (V1) bis 50 Prozent hiervon bestimmt wird.

7. Verfahren zum Herstellen eines Temperatursensor (100), wobei das Verfahren umfasst:
ein Vorbereiten eines Temperaturerfassungselements, wobei das Temperaturerfassungselement umfasst: ein temperaturempfindliches Element (5), das ein Paar von Elektroden (102) aufweist, die daran gekoppelt sind, und ein ummanteltes Leitungselement (130), wobei das ummantelte Leitungselement (130) umfasst: ein Paar von Leitungen (103), von denen jede ein Ende aufweist, und eine längliche Ummantelung (105), die einen Endabschnitt (105b) aufweist und das Paar von Leitungen (103) derart abdeckt, dass das eine Ende jeder der Leitungen (103) von einer Randoberfläche (105a) des einen Endabschnitts (105b) der länglichen Ummantelung (105) hervorsteht, wobei das eine Ende jeder der Leitungen (103) mit einer entsprechenden der Elektroden (102) verbunden ist, und
ein Vorbereiten einer Abdeckung (104), die eine längliche rohrförmige Wand (104a, 104b, 104c) mit einem geschlossenen Ende (CE) und einem offenen Ende (OE), das hierzu entgegengesetzt ist, aufweist,
**dadurch gekennzeichnet, dass** das Verfahren ferner umfasst
ein Ausbilden einer Vertiefung (108) in einer Außenoberfläche des einen Endabschnitts (105b) der länglichen Ummantelung (105), wobei die Vertiefung (108) um eine vorgegebene Entfernung von der Randoberfläche (105a) des einen Endabschnitts (105b) der länglichen Ummantelung (105) beabstandet ist,
ein Zuführen eines vorbestimmten Volumens eines Isolators (107a, 107b) in die Abdeckung (104), so dass der Isolator (107a, 107b) in die Abdeckung (104) eingefüllt wird,
ein Einführen des Temperaturerfassungselements in die Abdeckung (104) von dem temperaturempfindlichen Element (5) über das zugehörige offene Ende (OE), bis die Randoberfläche (105a) des einen Endabschnitts (105b) der länglichen Ummantelung (105) in Kontakt mit einem Mittelabschnitt der Innenwandoberfläche der rohrförmigen Wand (104a, 104b, 104c) der Abdeckung (104) in einer zugehörigen longitudinalen Richtung ist, so dass:
ein erster Raum (IS1) zwischen der Innenwandoberfläche (104a, 104b, 104c) der Abdeckung (104) und der Randoberfläche (105a) des einen Endabschnitt (105b) der länglichen Ummantelung (105) ausgebildet ist, wobei das temperaturempfindliche Element (5), das Paar von Elektroden (102) und das eine Ende jeder der Leitungen (103) in dem ersten offenen Raum (IS1) untergebracht sind und mit der rohrförmigen Wand (104a, 104b, 104c) abgedeckt sind,
ein Hauptteil des Isolators (107a) vollständig in den ersten Raum (IS1) eingefüllt ist,
das temperaturempfindliche Element (5), das Paar von Elektroden (102) und das eine Ende jeder der Leitungen (103) in dem Hauptteil des Isolators (107a) beinhaltet sind,
ein zweiter Raum (IS2) zwischen der Innenwandoberfläche der Abdeckung (104) und der Vertiefung (108) ausgebildet ist, und
ein verbleibender Teil des Isolators (107b) von dem ersten Raum (IS1) in den zweiten Raum (IS2) hindurchgedrungen ist, und
ein Verbinden einer offenen Endseite der rohrförmigen Wand (104a, 104b, 104c) der Abdeckung (104) in Bezug auf den zweiten Raum (IS2) mit dem Außenendabschnitt (105b) der länglichen Ummantelung (105).

8. Verfahren zum Herstellen eines Temperatursensors (100) nach Anspruch 7, wobei der eine Endabschnitt (105b) der länglichen Ummantelung (105) eine im Wesentlichen zylindrische Form aufweist, so dass die zugehörige Außenoberfläche ein Außenumfang ist, wobei die Vertiefung (108) eine ringförmige Vertiefung ist, die in dem Außenumfang des einen Endabschnitts (105b) der länglichen Ummantelung (105) ausgebildet ist.

9. Verfahren zur Herstellung eines Temperatursensors (100) nach Anspruch 7, wobei der Vertiefungsausbildungsschritt als die Vertiefung (108) zumindest ein Paar von Einsackstellen (108a) in der Außenoberfläche des einen Endabschnitts (105b) der länglichen Ummantelung (105) ausbildet.

10. Verfahren zur Herstellung eines Temperatursensors (100) nach Anspruch 9, wobei das Paar von Einsackstellen (108a) zueinander entgegengesetzt ausgerichtet ist, wobei eine Richtung einer Ausrichtung des Paares von Kerndrähten (103) und die einer Ausrichtung des Paares von Einsackstellen (108a) im Wesentlichen orthogonal zueinander sind.

11. Verfahren zur Herstellung eines Temperatursensors (100) nach einem der Ansprüche 7 bis 10, wobei der Einführschritt das Temperaturerfassungselement (5) in die Abdeckung (104) von dem temperaturempfindlichen Element über das zugehörige offene Ende (OE) einfügt, wobei ein Freiraum (110) zwischen der Außenoberfläche des einen Endabschnitts (105b) der länglichen Ummantelung (105) und der Innenwandoberfläche der rohrförmigen Wand (104a, 104b, 104c) der Abdeckung (104) eingehalten wird, wobei der Freiraum (110) mit sowohl dem ersten Raum (IS1) als auch dem zweiten Raum (IS2) in Verbindung steht, und
der verbleibende Teil des Isolators (107b) in den zweiten Raum (IS2) von dem ersten Raum (IS1) über den Freiraum (110) hindurchgedrungen ist.

12. Verfahren zur Herstellung eines Temperatursensors (100) nach einem der Ansprüche 7 bis 11, wobei der erste Raum (IS1) ein erstes Volumen (V1) aufweist und der zweite Raum (IS2) ein zweites Volumen (V2) aufweist, wobei das zweite Volumen (V2) in einem Bereich von 3 Prozent des ersten Volumens (V1) bis 50 Prozent hiervon bestimmt wird.

## Revendications

1. Capteur de température (100) comprenant :
un élément sensible à la chaleur (5) comportant une paire d'électrodes (102) qui lui sont couplées ;
un organe de câblage gainé (130) comprenant : une paire de fils (103) ayant chacun une extrémité ; et une gaine allongée (105) comportant une partie d'extrémité (105b) et recouvrant la paire de fils (103) de sorte que l'extrémité de chacun des fils (103) fait saillie par rapport à une surface de bord (105a) de la partie d'extrémité (105b) de la gaine allongée (105), l'extrémité de chacun des fils (103) étant reliée à l'une correspondante des électrodes (102) ; et
un couvercle (104) ayant une paroi tubulaire (104a, 104b, 104c) avec une extrémité fermée (CE) et une extrémité ouverte (OE) opposée à celle-ci, la partie d'extrémité (105b) de la gaine allongée (105) étant insérée dans le couvercle (104) à travers l'extrémité ouverte (OE) de celui-ci, une surface de paroi intérieure de la paroi tubulaire (104a, 104b, 104c) du couvercle (104) et la surface de bord (105a) de la partie d'extrémité (105b) de la gaine allongée (105) fournissant un premier espace (IS1) entre elles, l'élément sensible à la chaleur (5), la paire d'électrodes (102), et l'extrémité de chacun des fils (103) étant stockés dans le premier espace (IS1) et recouverts par la paroi tubulaire (104a, 104b, 104c),
**caractérisé en ce que**
au moins une partie d'une surface extérieure de la partie d'extrémité (105b) de la gaine allongée (105) qui est en regard de la surface de paroi intérieure de la paroi tubulaire (104a, 104b, 104c) du couvercle (104) est constituée d'un évidement (108), l'évidement (108) étant espacé d'une distance donnée de la surface de bord (105a) de la partie d'extrémité (105b) de la gaine allongée (105), la surface de paroi intérieure de la paroi tubulaire (104a, 104b, 104c) du couvercle (104) et l'évidement (108) fournissant un deuxième espace (IS2) entre eux ; et
le capteur de température (100) comprend en outre un premier isolant électrique (107a) complètement rempli à l'intérieur du premier espace (IS 1) ; et
un deuxième isolant électrique (107b) rempli à l'intérieur du deuxième espace (IS2).

2. Capteur de température (100) selon la revendication 1, dans lequel la partie d'extrémité (105b) de la gaine allongée (105) a une forme sensiblement cylindrique de sorte que la surface extérieure de celle-ci est une circonférence extérieure, et l'évidement (108) est un évidement annulaire formé dans la circonférence extérieure de la partie d'extrémité (105b) de la gaine allongée (105).

3. Capteur de température (100) selon la revendication 1, dans lequel l'évidement (108) est constitué d'au moins une paire d'alvéoles (108a) formées dans la surface extérieure de la partie d'extrémité (105b) de la gaine allongée (105).

4. Capteur de température (100) selon la revendication 3, dans lequel la paire d'alvéoles (108a) sont alignées à l'opposé l'une de l'autre, une direction d'alignement de la paire de fils de coeur (103) et une direction d'alignement de la paire d'alvéoles (108a) sont sensiblement orthogonales l'une par rapport à l'autre.

5. Capteur de température (100) selon l'une quelconque des revendications 1 à 4, dans lequel un espacement (110) est formé entre la surface extérieure de la partie d'extrémité (105b) de la gaine allongée (105) et la surface de paroi intérieure de la paroi tubulaire (104a, 104b, 104c) du couvercle (104), et l'espacement (110) communique avec le premier espace (IS1) et le deuxième espace (IS2).

6. Capteur de température (100) selon l'une quelconque des revendications 1 à 5, dans lequel le premier espace (IS1) a un premier volume (V1), et le deuxième espace (IS2) a un deuxième volume (V2), le deuxième volume (V2) est déterminé dans une plage de 3 % du premier volume (V1) à 50 % de celui-ci.

7. Procédé de fabrication d'un capteur de température (100), le procédé comprenant : la préparation d'un organe de détection de température, l'organe de détection de température comprenant : un élément sensible à la chaleur (5) comportant une paire d'électrodes (102) qui lui sont couplées ; et un organe de câblage gainé (130), l'organe de câblage gainé (130) comprenant : une paire de fils (103) ayant chacun une extrémité ; et une gaine allongée (105) comportant une partie d'extrémité (105b) et recouvrant la paire de fils (103) de sorte que l'extrémité de chacun des fils (103) fait saillie par rapport à une surface de bord (105a) de la partie d'extrémité (105b) de la gaine allongée (105), l'extrémité de chacun des fils (103) étant reliée à l'une correspondante des électrodes (102) ; et
la préparation d'un couvercle (104) ayant une paroi tubulaire allongée (104a, 104b, 104c) avec une extrémité fermée (CE) et une extrémité ouverte (OE) opposée à celle-ci ;
**caractérisé en ce que** le procédé comprend en outre :
la formation d'un évidement (108) dans une surface extérieure de la partie d'extrémité (105b) de la gaine allongée (105), l'évidement (108) étant espacé d'une distance donnée de la surface de bord (105a) de la partie d'extrémité (105b) de la gaine allongée (105) ;
le remplissage d'un volume prédéterminé d'un isolant (107a, 107b) dans le couvercle (104) de sorte que l'isolant (107a, 107b) est rempli à l'intérieur du couvercle (104) ;
l'insertion de l'organe de détection de température dans le couvercle (104) à partir de l'élément sensible à la chaleur (5) à travers l'extrémité ouverte (OE) de celui-ci jusqu'à ce que la surface de bord (105a) de la partie d'extrémité (105b) de la gaine allongée (105) soit en contact avec une partie centrale d'une surface de paroi intérieure de la paroi tubulaire (104a, 104b, 104c) du couvercle (104) dans une direction longitudinale de celle-ci de sorte que :
un premier espace (IS1) est formé entre la surface de paroi intérieure (104a, 104b, 104c) du couvercle (104) et la surface de bord (105a) de la partie d'extrémité (105b) de la gaine allongée (105), l'élément sensible à la chaleur (5), la paire d'électrodes (102) et l'extrémité de chacun des fils (103) étant stockés dans le premier espace (IS1) et recouverts par la paroi tubulaire (104a, 104b, 104c) ;
une partie majeure de l'isolant (107a) est complètement remplie à l'intérieur du premier espace (IS1) ;
l'élément sensible à la chaleur (5), la paire d'électrodes (102) et l'extrémité de chacun des fils (103) sont contenus dans la partie majeure de l'isolant (107a) ;
un deuxième espace (IS2) est formé entre la surface de paroi intérieure du couvercle (104) et l'évidement (108) ; et
une partie restante de l'isolant (107b) est répandue du premier espace (IS1) dans le deuxième espace (IS2) ; et
la jonction, à la partie d'extrémité extérieure (105b) de la gaine allongée (105), d'un côté d'extrémité ouverte de la paroi tubulaire (104a, 104b, 104c) du couvercle (104) par rapport au deuxième espace (IS2).

8. Procédé de fabrication d'un capteur de température (100) selon la revendication 7, dans lequel la partie d'extrémité (105b) de la gaine allongée (105) a une forme sensiblement cylindrique de sorte que la surface extérieure de celle-ci est une circonférence extérieure, et l'évidement (108) est un évidement annulaire formé dans la circonférence extérieure de la partie d'extrémité (105b) de la gaine allongée (105).

9. Procédé de fabrication d'un capteur de température (100) selon la revendication 7, dans lequel l'étape de formation d'évidement forme, en tant qu'évidement (108), au moins une paire d'alvéoles (108a) formées dans la surface extérieure de la partie d'extrémité (105b) de la gaine allongée (105).

10. Procédé de fabrication d'un capteur de température (100) selon la revendication 9, dans lequel la paire d'alvéoles (108a) sont alignées à l'opposé l'une de l'autre, une direction d'alignement de la paire de fils de coeur (103) et une direction d'alignement de la paire d'alvéoles (108a) sont sensiblement orthogonales l'une par rapport à l'autre.

11. Procédé de fabrication d'un capteur de température (100) selon l'une quelconque des revendications 7 à 10, dans lequel l'étape d'insertion insère l'organe de détection de température (5) dans le couvercle (104) à partir de l'élément sensible à la chaleur à travers l'extrémité ouverte (OE) de celui-ci avec un espacement (110) maintenu entre la surface extérieure de la partie d'extrémité (105b) de la gaine allongée (105) et la surface de paroi intérieure de la paroi tubulaire (104a, 104b, 104c) du couvercle (104), l'espacement (110) communiquant avec le premier espace (IS1) et le deuxième espace (IS2), et
la partie restante de l'isolant (107b) est répandue dans le deuxième espace (IS2) à partir du premier espace (IS1) à travers l'espacement (110).

12. Procédé de fabrication d'un capteur de température (100) selon l'une quelconque des revendications 7 à 11, dans lequel le premier espace (IS1) a un premier volume (V1), et le deuxième espace (IS2) a un deuxième volume (V2), le deuxième volume (V2) est déterminé dans une plage de 3 % du premier volume (V1) à 50 % de celui-ci.
